# EUROPÄISCHE PATENTANMELDUNG

(11) **EP 3 627 690 A1**
(43) Veröffentlichungstag der Anmeldung: **25.03.2020**
(21) Anmeldenummer: 19192758.1
(22) Anmeldetag: 21.08.2019
(51) Int. Cl.: H02P 7/28, H02P 29/40, H02P 6/06, H02P 6/182, A47L 9/04, A47L 9/28

(54) **VERFAHREN UND VORRICHTUNG ZUM EINSTELLEN EINES BETRIEBSZUSTANDS EINES ZUMINDEST EINE BODENBÜRSTE ANTREIBENDEN MOTORS FÜR EIN PFLEGEGERÄT UND PFLEGEGERÄT**

(30) Priorität: 19.09.2018 DE 102018122966
(71) Anmelder: Miele & Cie. KG, 33332 Gütersloh (DE)
(72) Erfinder: Rodehüser, Tobias, 59329 Wadersloh (DE); Neufeld, Alexander, 33619 Bielefeld (DE); Rech, Thomas, 53881 Euskirchen (DE)

(57) **Zusammenfassung**

Die Erfindung betrifft ein Verfahren zum Einstellen eines Betriebszustands eines zumindest eine Bodenbürste (110) antreibenden Motors (115) für ein Pflegegerät (100). Das Verfahren (600) weist einen Schritt des Einlesens und einen Schritt des Bereitstellens auf. Im Schritt des Einlesens werden ein Sollbetriebszustand (130) des Motors (115) des Pflegegeräts (100) und ein Funktionsparameter (135) des Motors (115) eingelesen. Der Funktionsparameter (135) repräsentiert einen aktuellen Betriebszustand des Motors (115). Im Schritt des Bereitstellens wird unter Verwendung des Sollbetriebszustands (130) und des Funktionsparameters (135) ein Steuersignal (140) zum Ansteuern des Motors (115) bereitgestellt.

## Beschreibung

Die Erfindung betrifft ein Verfahren und eine Vorrichtung zum Einstellen eines Betriebszustands eines zumindest eine Bodenbürste antreibenden Motors für ein Pflegegerät und ein Pflegegerät.

Bei einem Pflegegerät wie beispielsweise einem Akku-Staubsauger kann eine mit einem Motor betriebene Bodenbürste zum Einsatz kommen. Bei abfallender Akku-Spannung kann bei einem ungeregelten Motor die Drehzahl ebenfalls absinken, sodass bei einem fast leeren Akku eine deutlich geringe Drehzahl als bei einem vollen Akku auftritt. Dadurch verschlechtert sich die Reinigungsleistung mit sinkender Akku-Spannung.

Der Erfindung stellt sich die Aufgabe, ein verbessertes Verfahren und eine verbesserte Vorrichtung zum Einstellen eines Betriebszustands eines zumindest eine Bodenbürste antreibenden Motors für ein Pflegegerät und ein verbessertes Pflegegerät zu schaffen.

Erfindungsgemäß wird diese Aufgabe durch ein Verfahren und eine Vorrichtung zum Einstellen eines Betriebszustands eines zumindest eine Bodenbürste antreibenden Motors für ein Pflegegerät und ein Pflegegerät mit den Schritten bzw. Merkmalen der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass ein Betriebszustand des die Bodenbürste antreibenden Motors eingestellt werden kann. Dadurch kann beispielsweise die Drehzahl des Motors konstant bleiben, unabhängig von einem Bodenbelag eines mittels der Bodenbürste zu reinigenden Bodens. Dies ist vorteilhaft in Bezug auf eine konstante und effiziente Reinigungsleistung des Pflegegeräts. Zudem kann die Drehzahl des die Bodenbürste antreibenden Motors unabhängig von der vorliegenden Akku-Spannung konstant gehalten werden. Darüber hinaus kann der hier beschriebene Ansatz vorteilhafterweise kostensparend realisiert werden.

Auch wenn der beschriebene Ansatz anhand eines Haushaltgeräts beschrieben wird, kann der hier beschriebene Ansatz entsprechend im Zusammenhang mit einem gewerblichen oder professionellen Gerät eingesetzt werden.

Ein Verfahren zum Einstellen eines Betriebszustands eines zumindest eine Bodenbürste antreibenden Motors für ein Pflegegerät weist zumindest einen Schritt des Einlesens und einen Schritt des Bereitstellens auf. Im Schritt des Einlesens werden ein Sollbetriebszustand und ein Funktionsparameter des Motors des Pflegegeräts eingelesen. Der Funktionsparameter repräsentiert einen aktuellen Betriebszustand des Motors. Im Schritt des Bereitstellens wird unter Verwendung des Sollbetriebszustands und des Funktionsparameters ein Steuersignal zum Ansteuern des Motors ausgegeben.

Bei dem Pflegegerät kann es sich um einen Staubsauger handeln, beispielsweise auch um einen Handstaubsauger oder Saugroboter, oder um ein anderes Reinigungsgerät mit einer Bodenbürste wie beispielsweise ein Teppichreinigungsgerät. Das Pflegegerät kann beispielsweise einen wieder aufladbaren Energieversorgungsspeicher umfassen. Der Motor kann ein Gleichstrommotor sein, beispielsweise ein bürstenloser Gleichstrommotor. Unter dem Sollbetriebszustand kann eine gewünschte Leistung des Motors verstanden werden, beispielsweise ein bestimmter Wert einer Drehzahl oder einer elektrischen Leistung des Motors. Der aktuelle Betriebszustand des Motors kann ein aktuell gemessener Wert einer Leistung des Motors wie der Drehzahl oder einer Spannung sein. Das Steuersignal kann beispielsweise ausgebildet sein, den Sollbetriebszustand anzusteuern, wenn der aktuelle Betriebszustand von dem Sollbetriebszustand abweicht. Das Steuersignal kann zum Ansteuern des Motors beispielsweise an eine Regelungseinrichtung des Pflegegeräts ausgegeben werden, die ausgebildet ist, unter Verwendung des Steuersignals eine Leistung des Motors zu regeln.

Gemäß einer Ausführungsform kann im Schritt des Bereitstellens das Steuersignal als ein Tastgrad eines pulsweitenmodulierten Signals bereitgestellt werden. Dazu kann das Steuersignal beispielsweise einen Tastgrad des Motors repräsentieren. Mittels des Tastgrads kann eine gewünschte Motorleistung eingestellt werden. Zum Ermitteln des Tastgrads kann beispielsweise ein Wert eines gemessenen Stroms als aktueller Betriebszustand mit einem Wert eines Stroms des Motors als Sollbetriebszustand unter Verwendung einer vorbestimmten Vergleichsvorschrift verglichen werden. Der ermittelte Tastgrad kann als Reglerausgangsgröße verwendet werden, um den Betriebszustand des Pflegegeräts einzustellen. Vorteilhafterweise ist es möglich, durch ein Ansteuern des Motors des Pflegegeräts die mittels des Motors angetriebene Bodenbürste anzusteuern, um die Reinigungsleistung des Pflegegeräts einzustellen.

Im Schritt des Einlesens kann gemäß einer Ausführungsform ein Sollbetriebszustand eingelesen werden, der einen konstanten Sollbetriebsparameter des Motors umfasst oder repräsentiert. Bei dem konstanten Sollbetriebsparameter kann es sich beispielsweise um eine gewünschte konstante Drehzahl oder konstante Spannung des Motors handeln. Dies ist von Vorteil, um unabhängig von einer Last, beispielsweise von einem zu reinigenden Bodenbelag, eine konstante Betriebsleistung des Pflegegeräts zu erreichen, was die Reinigungsleistung des Pflegegeräts verbessert.

Das Steuersignal kann gemäß einer Ausführungsform im Schritt des Bereitstellens unter Verwendung eines Signals eines Drehzahlreglers und zusätzlich oder alternativ eines Leistungsreglers und zusätzlich oder alternativ eines Stromreglers bereitgestellt werden. In diesem Fall kann das Steuersignal von der Regelungseinrichtung in Form des Drehzahlreglers und/oder des Leistungsreglers und/oder des Stromreglers an den Motor bereitgestellt werden.

Ferner kann im Schritt des Einlesens als der Sollbetriebszustand gemäß einer Ausführungsform eine Drehzahl des Motors und als Funktionsparameter eine induzierte Gegenspannung des Motors eingelesen werden. In diesem Fall kann das Steuersignal im Schritt des Bereitstellens unter Verwendung des Drehzahlreglers bereitgestellt werden.

Wenn im Schritt des Einlesens als Sollbetriebszustand die Drehzahl des Motors und als Funktionsparameter die induzierte Gegenspannung des Motors eingelesen werden, kann im Schritt des Bereitstellens gemäß einer Ausführungsform eine Abweichung zwischen der Drehzahl und der mit einer Kraftkonstanten multiplizierten induzierten Gegenspannung bestimmt werden. Die Kraftkonstante kann einen Zusammenhang zwischen einer gegenmotorischen Kraft des Motors und einer hierdurch induzierten Spannung abbilden. Das Steuersignal kann unter Verwendung der Abweichung bereitgestellt oder ausgeregelt werden. Die Kraftkonstante kann auch als Back EMF Konstante ("back electromotive force constant") bezeichnet werden. Aus einem Produkt der induzierten Gegenspannung und der Kraftkonstanten kann eine aktuelle Drehzahl des Motors ermittelt werden, um unter Verwendung eines Sollbetriebszustands bezüglich der Drehzahl einen Tastgrad zu ermitteln, um den Betriebszustand des Pflegegeräts einzustellen.

Auch kann im Schritt des Einlesens gemäß einer Ausführungsform als der Sollbetriebszustand eine Information über eine mechanische Leistung, und als Funktionsparameter eine Information über eine induzierte Gegenspannung des Motors und als ein weiterer Funktionsparameter eine Information über einen gemessenen durch den Motor fließenden Messstrom eingelesen werden.

Wenn im Schritt des Einlesens als Sollbetriebszustand die mechanische Leistung, als Funktionsparameter die induzierte Gegenspannung des Motors und als der weitere Funktionsparameter der gemessene durch den Motor fließende Messstrom eingelesen werden, kann gemäß einer Ausführungsform im Schritt des Bereitstellens eine Abweichung zwischen der mechanischen Leistung und einem Produkt aus der mit der Kraftkonstanten multiplizierten induzierten Gegenspannung und dem mit einer Drehmomentkonstanten des Motors multiplizierten Messstrom bestimmt werden. Die Drehmomentkonstante kann einen Zusammenhang zwischen einem Drehmoment und dem Messstrom abbilden. Das Steuersignal kann unter Verwendung der Abweichung bereitgestellt oder ausgeregelt werden. Vorteilhafterweise ist es damit möglich, eine mechanische Leistung des Motors einfach zu ermitteln.

Gemäß einer Ausführungsform kann im Schritt des Einlesens als der Sollbetriebszustand auch eine Information über einen durch den Motor fließenden Sollstrom und als Funktionsparameter eine Information über den Messstrom eingelesen werden.

In diesem Fall kann im Schritt des Bereitstellens gemäß einer Ausführungsform eine Abweichung zwischen dem Sollstrom und dem Messstrom bestimmt werden, und das Steuersignal kann unter Verwendung der Abweichung bereitgestellt oder ausgeregelt werden.

Außerdem kann im Schritt des Einlesens gemäß einer Ausführungsform ein Sensorsignal über eine Schnittstelle zu einem Temperatursensor eingelesen werden. Das Sensorsignal kann eine aktuelle Betriebstemperatur des Motors repräsentieren. Unter Verwendung der aktuellen Betriebstemperatur des Motors kann der aktuelle Betriebszustand des Motors erfasst werden. Diese Ausführungsform ist vorteilhafterweise kostengünstig realisierbar.

Ferner kann das Steuersignal im Schritt des Bereitstellens gemäß einer Ausführungsform unabhängig von einer Spannung eines Energieversorgungsspeichers des Pflegegeräts ausgegeben werden. Unter Verwendung des aktuellen Betriebszustands des Motors und des Sollbetriebszustands kann der Tastgrad ermittelt werden, ohne eine Akku-Spannung des Pflegegeräts zu erfassen. Dies ist vorteilhafterweise kostensparend, da kein Spannungsteiler zum Messer der Akku-Spannung erforderlich ist.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Mit dem hier vorgestellten Ansatz wird zudem ein Pflegegerät vorgestellt. Das Pflegegerät umfasst einen Motor, zumindest eine mittels des Motors betriebene Bodenbürste und einer Ausführungsform der vorstehend genannten Vorrichtung.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Ausführungsbeispiele der Erfindung sind in den Zeichnungen rein schematisch dargestellt und werden nachfolgend näher beschrieben. Es zeigt
- Figur 1: ein Pflegegerät mit einer Vorrichtung zum Einstellen eines Betriebszustands eines zumindest eine Bodenbürste antreibenden Motors für das Pflegegerät gemäß einem Ausführungsbeispiel;
- Figur 2: ein Schaltbild eines Pflegegeräts mit einer Vorrichtung zum Einstellen eines Betriebszustands eines zumindest eine Bodenbürste antreibenden Motors für das Pflegegerät gemäß einem Ausführungsbeispiel;
- Figur 3: ein Schaltbild einer Vorrichtung zum Einstellen eines Betriebszustands eines zumindest eine Bodenbürste antreibenden Motors für das Pflegegerät gemäß einem Ausführungsbeispiel;
- Figur 4: ein Schaltbild einer Vorrichtung zum Einstellen eines Betriebszustands eines zumindest eine Bodenbürste antreibenden Motors für das Pflegegerät gemäß einem Ausführungsbeispiel;
- Figur 5: ein Schaltbild einer Vorrichtung zum Einstellen eines Betriebszustands eines zumindest eine Bodenbürste antreibenden Motors für das Pflegegerät gemäß einem Ausführungsbeispiel; und
- Figur 6: ein Ablaufdiagramm eines Verfahrens zum Einstellen eines Betriebszustands eines zumindest eine Bodenbürste antreibenden Motors für ein Pflegegerät gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

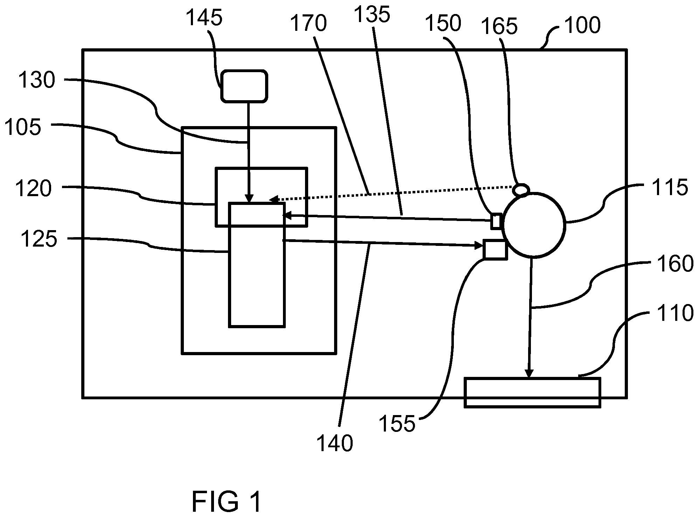

Figur 1 zeigt ein Pflegegerät 100 mit einer Vorrichtung 105 zum Einstellen eines Betriebszustands eines zumindest eine Bodenbürste 110 antreibenden Motors 115 für das Pflegegerät 100 gemäß einem Ausführungsbeispiel. Das Pflegegerät 100 umfasst die Vorrichtung 105, die Bodenbürste 110 und den Motor 115. Die Vorrichtung 105 weist eine Einleseeinrichtung 120 und eine Bereitstellungseinrichtung 125 auf. Die Einleseeinrichtung 120 ist ausgebildet, einen Sollbetriebszustand 130 des Motors 115 einzulesen. Zudem ist die Einleseeinrichtung 120 dazu ausgebildet, einen Funktionsparameter 135 des Motors 115 einzulesen. Der Funktionsparameter 135 repräsentiert einen aktuellen Betriebszustand des Motors 115. Die Bereitstellungseinrichtung 125 ist ausgebildet, unter Verwendung des Sollbetriebszustands 130 und des Funktionsparameters 135 ein Steuersignal 140 zum Ansteuern des Motors 115 auszugeben.

Der Sollbetriebszustand 130 und der Funktionsparameter 135 werden beispielsweise in Form von elektrischen Signalen eingelesen, die einen Wert des Sollbetriebszustands 130 oder bei dem Funktionsparameter 135 einen Wert des aktuellen Betriebszustands repräsentieren. Der Sollbetriebszustand 130 wird hier beispielhaft von einer Speichereinrichtung 145 bereitgestellt. Bei dem Sollbetriebszustand 130 kann es sich um einen vorgespeicherten Wert handeln, oder um einen mittels einer Eingabeeinrichtung des Pflegegeräts 100 eingegebener Wert, der eine gewünschte Drehzahl oder eine gewünschte Spannung oder eine gewünschte Leistung oder eines gewünschten Stroms des Motors 115 repräsentiert. Der Funktionsparameter 135 wird hier beispielhaft von einer Erfassungseinrichtung 150 zum Erfassen einer induzierten Gegenspannung bereitgestellt. Alternativ kann der Funktionsparameter auch von einer Strommesseinrichtung bereitgestellt werden. Das Steuersignal 140 wird an eine Reglungseinrichtung 155 bereitgestellt. Bei der Reglungseinrichtung 155 handelt es sich gemäß einem Ausführungsbeispiel um einen Stromregler oder einen Leistungsregler oder einen Drehzahlregler oder um eine Kombination der genannten Regler. Der Motor 115 stellt hier unter Verwendung des Steuersignals 140 beispielhaft ein Antriebssignal 160 zum Betreiben der Bodenbürste 110 in dem Betriebszustand bereit.

Gemäß einem Ausführungsbeispiel wird das Steuersignal 140 als ein Tastgrad eines pulsweitenmodulierten Signals bereitgestellt. Unter Verwendung des Steuersignals 140 als Tastgrad eines pulsweitenmodulierten Signals wird mittels der Reglungseinrichtung 155 ein Tastgrad des Motors 115 eingestellt, um den Betriebszustand des Motors 115 einzustellen.

Der Sollbetriebszustand 130 umfasst gemäß einem Ausführungsbeispiel einen konstanten Sollbetriebsparameter des Motors 115. Der Sollbetriebszustand 130 kann beispielsweise eine konstante Drehzahl oder eine konstante Spannung des Motors 115 sein, um unabhängig von einer Last, beispielsweise unabhängig von einem Bodenbelag eines mittels der Bodenbürste 110 zu reinigenden Bodens, eine konstante Reinigungsleistung des Pflegegeräts 100 zu erreichen.

Optional wird das Steuersignal 140 gemäß einem Ausführungsbeispiel ferner unabhängig von einer Spannung eines Energieversorgungsspeichers des Pflegegeräts 100 ausgegeben. Dies ist von Vorteil, um bei der Bodenbürste 110 unabhängig vom Bodenbelag, beispielsweise Teppich oder Hartboden, eine konstante Drehzahl bei unbekannter Akku-Spannung einzuregeln.

Zudem umfasst das Pflegegerät 100 gemäß dem hier gezeigten Ausführungsbeispiel einen Temperatursensor 165. Der Temperatursensor 165 ist dazu ausgebildet, eine aktuelle Betriebstemperatur des Motors 115 zu sensieren und ein Sensorsignal 170 bereitzustellen, das die sensierte aktuelle Betriebstemperatur des Motors 115 repräsentiert. Die Einleseeinrichtung ist dazu ausgebildet, das Sensorsignal 170 einzulesen.

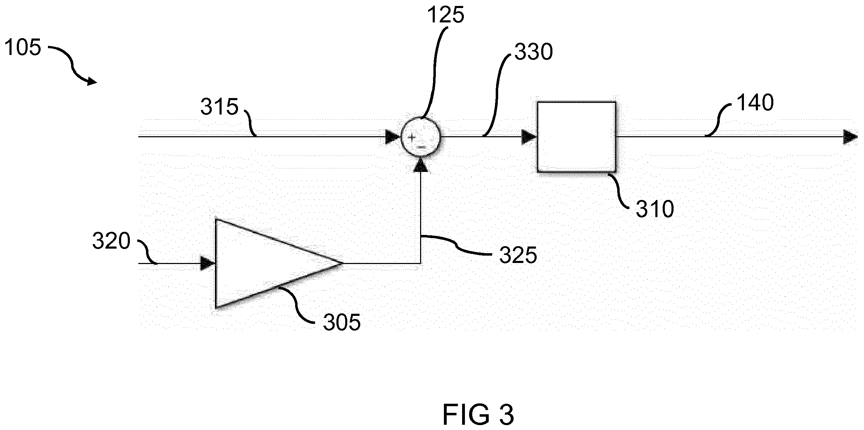

Mittels der hier gezeigten Vorrichtung 105 wird der Tastgrad des Motors 115 direkt vom Regler, der Reglungseinrichtung 155, berechnet. Bei dem Regler kann es sich gemäß einem Ausführungsbeispiel um einen Stromregler, einen Leistungsregler oder einen Drehzahlregler handeln, wie anhand der nachfolgenden Figuren 3 bis 5 beschrieben. Für den Bodenbürstenantrieb ist dabei eine Drehzahlregelung mit überlagertem Leistungsregler vorteilhaft.

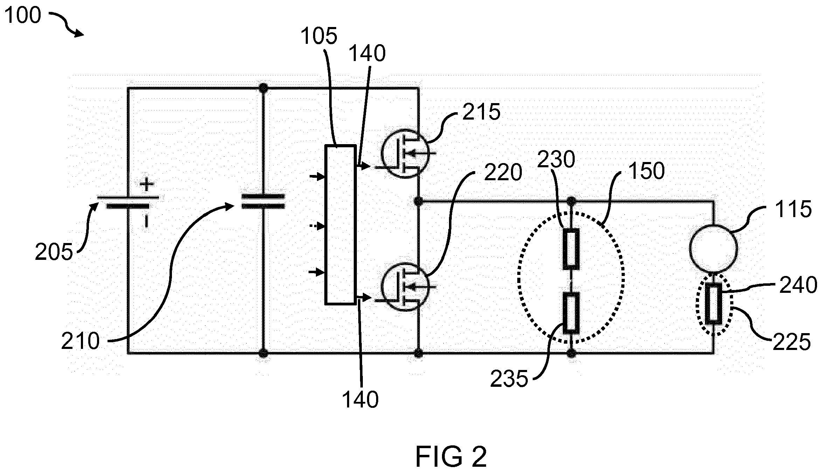

Figur 2 zeigt ein Schaltbild eines Pflegegeräts 100 mit einer Vorrichtung 105 zum Einstellen eines Betriebszustands eines zumindest eine Bodenbürste antreibenden Motors 115 für das Pflegegerät 100 gemäß einem Ausführungsbeispiel. Das Pflegegerät 100 weist hier neben der Vorrichtung 105 und dem Motor 115 eine Energieversorgungseinrichtung 205, einen Zwischenkreiskondensator 210, eine Schaltereinrichtung mit einem ersten Schalter 215 und einem zweiten Schalter 220, die Erfassungseinrichtung 150 zum Erfassen einer induzierten Gegenspannung am Motor 115 und eine Strommesseinrichtung 225 auf. Die Energieversorgungseinrichtung 205 kann eine Batterie sein, die als wieder aufladbare Batterie ausgeführt sein kann. Die Schalter 215 und 220 können als Metall-Oxid-Halbleiter-Feldeffekttransistoren, als MOSFETs, ausgeführt sein. Die Strommesseinrichtung 225 kann ausgebildet sein, einen Strom des Motors 115 zu messen. Die Erfassungseinrichtung 150 weist einen ersten Widerstand 230 und einen zweiten Widerstand 235 auf, und die Strommesseinrichtung 225 weist einen dritten Widerstand 240 auf.

Die Energieversorgungseinrichtung 205 weist einen ersten Anschluss, hier beispielhaft der Pluspol, auf, der mit einem ersten Anschluss des Zwischenkreiskondensators 210 und mit einem ersten Anschluss des ersten Schalters 215 verbunden ist. Ein zweiter Anschluss des ersten Schalters 215 ist mit einem ersten Anschluss des zweiten Schalters 220 verbunden. Zudem ist der zweite Anschluss des ersten Schalters 215 mit einem ersten Anschluss des ersten Widerstands 230 verbunden, und mit dem Motor 115. Ein zweiter Anschluss des ersten Widerstands 230 ist mit einem ersten Anschluss des zweiten Widerstands 235 verbunden. Der Motor 115 ist mit einem ersten Anschluss des dritten Widerstands 240 verbunden. Ein zweiter Anschluss der Energieversorgungseinrichtung 205 ist mit einem zweiten Anschluss des Zwischenkreiskondensators 210 und mit einem zweiten Anschluss des zweiten Schalters 220 verbunden. Der zweite Anschluss des zweiten Schalters 220 ist mit einem zweiten Anschluss des zweiten Widerstands 235 verbunden, und mit einem zweiten Anschluss des mit dem Motor 115 verbundenen dritten Widerstands 240.

Mittels der Energieversorgungseinrichtung 205 und dem Schalter 215 wird eine Spannung an den Motor 115 angelegt. Bei dem Motor 115 handelt es sich beispielsweise um einen Gleichstrommotor. Die Vorrichtung 105 gibt das Steuersignal 140 an den ersten Schalter 215 und zusätzlich oder alternativ ein Steuersignal an den zweiten Schalter 220 aus.

Figur 3 zeigt ein Schaltbild einer Vorrichtung 105 zum Einstellen eines Betriebszustands eines zumindest eine Bodenbürste antreibenden Motors für das Pflegegerät gemäß einem Ausführungsbeispiel. Die Vorrichtung 105 ist hier als Drehzahlregler ausgeführt. Die Vorrichtung 105 umfasst einen Verstärker 305, die Bereitstellungseinrichtung 125 und einen PI-Regler 310. Gemäß dem hier gezeigten Ausführungsbeispiel wird als Sollbetriebszustand ein Sollwert einer Drehzahl des Motors in Form eines Solldrehzahlsignals 315 eingelesen. Als Funktionsparameter wird eine induzierte Gegenspannung des Motors in Form eines Gegenspannungssignals 320 eingelesen. Der Verstärker 305 ist ausgebildet, den Funktionsparameter um einen Verstärkungsfaktor zu verstärken. Der Verstärkungsfaktor entspricht einer Kraftkonstanten des Motors. Die Kraftkonstante bildet einen Zusammenhang zwischen einer gegenmotorischen Kraft des Motors und einer hierdurch induzierten Spannung ab und wird auch als Back EMF-Konstante ("back electromotive force constant") bezeichnet. Die mit der Kraftkonstanten multiplizierte Gegenspannung des Motors repräsentiert die aktuelle Drehzahl des Motors und wird von dem Verstärker 305 in Form eines elektrischen Signals als Kraftkonstantensignal 325 an die Bereitstellungseinrichtung 125 bereitgestellt.

Die Bereitstellungseinrichtung 125 ist gemäß dem hier gezeigten Ausführungsbeispiel dazu ausgebildet, eine Abweichung zwischen der Drehzahl und der mit der Kraftkonstanten multiplizierten induzierten Gegenspannung des Motors zu bestimmen, und das Ergebnis in Form eines Abweichungssignals 330 an den PI-Regler 310 bereitzustellen. Der PI-Regler 310 ist ausgebildet, das Steuersignal 140 unter Verwendung des Abweichungssignals 330 als Tastgrad auszuregeln. Zum Einstellen des Betriebszustands des Motors ist es dabei nicht erforderlich, eine Akku-Spannung des Pflegegeräts zu messen.

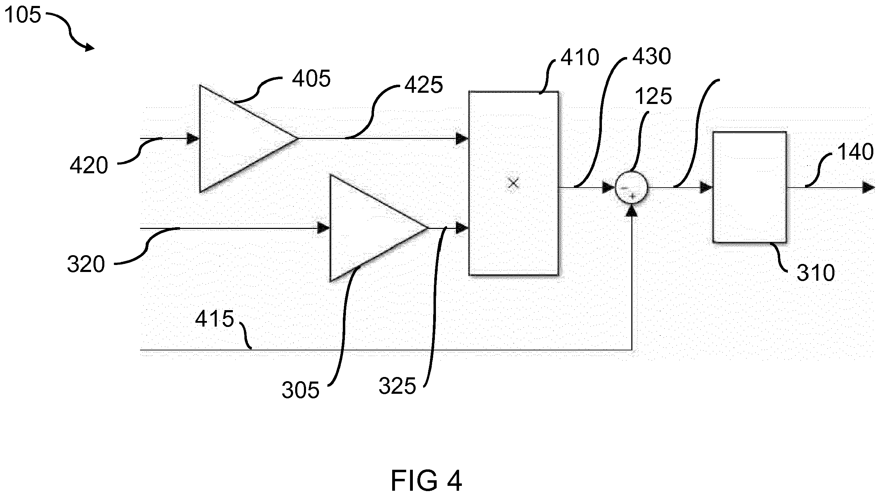

Figur 4 zeigt ein Schaltbild einer Vorrichtung 105 zum Einstellen eines Betriebszustands eines zumindest eine Bodenbürste antreibenden Motors für das Pflegegerät gemäß einem Ausführungsbeispiel. Die Vorrichtung 105 ist hier als Leistungsregler ausgeführt. Neben der Bereitstellungseinrichtung 125 umfasst die Vorrichtung 105 hier den Verstärker 305, einen weiteren Verstärker 405, eine Berechnungseinrichtung 410 und den PI-Regler 310. Gemäß dem hier gezeigten Ausführungsbeispiel wird als der Sollbetriebszustand eine gewünschte mechanische Leistung in Form eines Sollleistungssignals 415 eingelesen. Als Funktionsparameter wird die induzierte Gegenspannung des Motors in Form des Gegenspannungssignals 320 eingelesen, und als ein weiterer Funktionsparameter wird ein gemessener durch den Motor fließender Messstrom in Form eines Messstromsignals 420 eingelesen. Der Verstärker 305 ist ausgebildet, den Funktionsparameter, also die induzierte Gegenspannung, um die Kraftkonstante zu verstärken. Die mit der Kraftkonstanten multiplizierte Gegenspannung des Motors repräsentiert die aktuelle Drehzahl des Motors und wird von dem Verstärker 305 in Form des Kraftkonstantensignals 325 an die Bereitstellungseinrichtung 125 bereitgestellt. Der weitere Verstärker 405 ist ausgebildet, den weiteren Funktionsparameter, also den Messstrom, mit einer Drehmomentkonstanten zu verstärken. Die Drehmomentkonstante bildet einen Zusammenhang zwischen einem Drehmoment und dem Messstrom ab. Der mit der Drehmomentkonstanten multiplizierte Messstrom wird von dem weiteren Verstärker 405 in Form eines elektrischen Signals als Drehmomentkonstantensignal 425 an die Bereitstellungseinrichtung 125 bereitgestellt.

Gemäß dem hier gezeigten Ausführungsbeispiel ist die Berechnungseinrichtung 410 ausgebildet, unter Verwendung des Kraftkonstantensignals 325 und des Drehmomentkonstantensignals 425 ein Produkt aus der mit der Kraftkonstanten multiplizierten induzierten Gegenspannung und dem mit einer Drehmomentkonstanten des Motors multiplizierten Messstrom zu bestimmen, um die aktuelle mechanische Leistung zu bestimmen. Die Berechnungseinrichtung 410 ist zudem ausgebildet, das Ergebnis in Form eines Produktsignals 430 an die Bereitstellungseinrichtung 125 bereitzustellen. Die Bereitstellungseinrichtung 125 ist ausgebildet, eine Abweichung zwischen der mechanischen Leistung des Sollleistungssignals 415 und dem Produkt aus der mit der Kraftkonstanten multiplizierten induzierten Gegenspannung und dem mit einer Drehmomentkonstanten des Motors multiplizierten Messstrom zu bestimmen, und das Ergebnis in Form eines Abweichungssignals 330 an den PI-Regler 310 bereitzustellen. Der PI-Regler 310 ist ausgebildet, das Steuersignal 140 unter Verwendung des Abweichungssignals 330 auszuregeln, wobei die Reglerausgangsgröße ein Tastgrad ist. Vorteilhafterweise ist es somit möglich, eine maximale Leistung des Motors ohne messtechnische Erfassung der Akkuspannung funktional zu begrenzen. Wenn der Wirkungsgrad des Motors durch eine Kennlinie bekannt ist, kann auf diese Weise ebenso die elektrische Leistung des Motors geregelt werden.

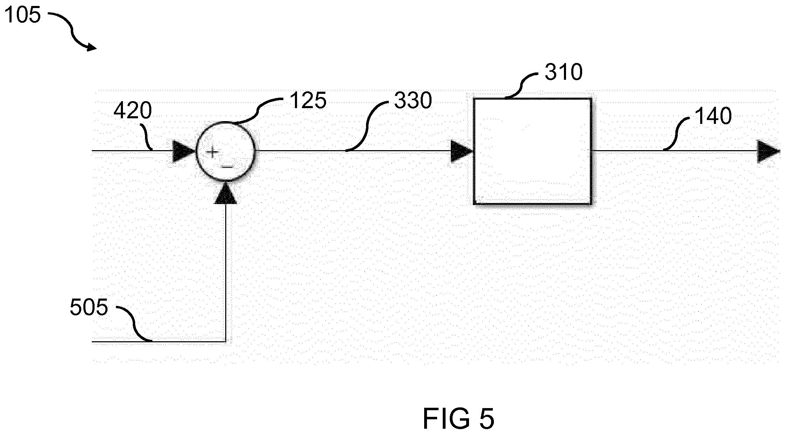

Figur 5 zeigt ein Schaltbild einer Vorrichtung 105 zum Einstellen eines Betriebszustands eines zumindest eine Bodenbürste antreibenden Motors für das Pflegegerät gemäß einem Ausführungsbeispiel. Die Vorrichtung 105 ist hier als Stromregler ausgeführt und umfasst die Bereitstellungseinrichtung 125 und den PI-Regler 310. Gemäß dem hier gezeigten Ausführungsbeispiel wird als Sollbetriebszustand ein durch den Motor fließender Sollstrom in Form eines Sollstromsignals 505 eingelesen. Als Funktionsparameter wird der Messstrom in Form des Messstromsignals 420 eingelesen.

Die Bestimmungseinrichtung 125 ist gemäß dem hier gezeigten Ausführungsbeispiel dazu ausgebildet, eine Abweichung zwischen dem Sollstrom und dem Messstrom zu bestimmen und das Ergebnis in Form des Abweichungssignals 330 an den PI-Regler 310 bereitzustellen. Der PI-Regler 310 ist ausgebildet, das Steuersignal 140 unter Verwendung der Abweichung auszuregeln, wobei die Reglerausgangsgröße ein Tastgrad ist. Vorteilhafterweise ist es somit möglich, mittels der Vorrichtung 105 in Form des hier gezeigten Stromreglers eine konstante Stromversorgung des Motors zu erreichen, ohne die Akkuspannung messtechnisch zu erfassen.

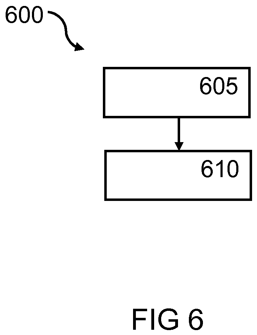

Figur 6 zeigt ein Ablaufdiagramm eines Verfahrens 600 zum Einstellen eines Betriebszustands eines zumindest eine Bodenbürste antreibenden Motors für ein Pflegegerät gemäß einem Ausführungsbeispiel. Das Verfahren 600 umfasst einen Schritt des Einlesens 605 und einen Schritt des Bereitstellens 610. Im Schritt 605 des Einlesens werden ein Sollbetriebszustand des Motors des Pflegegeräts und eines Funktionsparameters des Motors eingelesen. Der Funktionsparameter repräsentiert einen aktuellen Betriebszustand des Motors. Im Schritt 610 des Bereitstellens wird unter Verwendung des Sollbetriebszustands und des Funktionsparameters ein Steuersignal zum Ansteuern des Motors bereitgestellt.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

Das erfindungsgemäße Verfahren ist auch auf andere Motortypen, wie zum Beispiel einen BLDC Motor übertragbar.

## Patentansprüche

1. Verfahren (600) zum Einstellen eines Betriebszustands eines zumindest eine Bodenbürste (110) antreibenden Motors (115) für ein Pflegegerät (100), wobei das Verfahren (600) folgende Schritte aufweist:
Einlesen (605) eines Sollbetriebszustands (130) des Motors (115) des Pflegegeräts (100) und eines Funktionsparameters (135) des Motors (115), wobei der Funktionsparameter (135) einen aktuellen Betriebszustand des Motors (115) repräsentiert; und
Bereitstellen (610) eines Steuersignals (140) zum Ansteuern des Motors (115) unter Verwendung des Sollbetriebszustands (130) und des Funktionsparameters (135).

2. Verfahren (600) gemäß Anspruch 1, bei dem im Schritt (610) des Bereitstellens das Steuersignal (140) als ein Tastgrad eines pulsweitenmodulierten Signals bereitgestellt wird.

3. Verfahren (600) gemäß einem der vorangegangenen Ansprüche, bei dem im Schritt (605) des Einlesens ein Sollbetriebszustand (130) eingelesen wird, der einen konstanten Sollbetriebsparameter des Motors (115) umfasst oder repräsentiert.

4. Verfahren (600) gemäß einem der vorangegangenen Ansprüche, bei dem im Schritt (610) des Bereitstellens das Steuersignal (140) unter Verwendung eines Signals eines Drehzahlreglers und/oder eines Leistungsreglers und/oder eines Stromreglers bereitgestellt wird.

5. Verfahren (600) gemäß einem der vorangegangenen Ansprüche, wobei im Schritt (605) des Einlesens als der Sollbetriebszustand (130) eine Drehzahl des Motors (115) und als Funktionsparameter (135) eine induzierte Gegenspannung des Motors (115) eingelesen wird.

6. Verfahren (600) gemäß Anspruch 5, bei dem im Schritt (610) des Bereitstellens eine Abweichung zwischen der Drehzahl und der mit einer Kraftkonstanten multiplizierten induzierten Gegenspannung bestimmt wird, wobei die Kraftkonstante einen Zusammenhang zwischen einer gegenmotorischen Kraft des Motors (115) und einer hierdurch induzierten Spannung abbildet, wobei das Steuersignal (140) unter Verwendung der Abweichung bereitgestellt wird.

7. Verfahren (600) gemäß einem der vorangegangenen Ansprüche, wobei im Schritt (605) des Einlesens als der Sollbetriebszustand (130) eine Information über eine mechanische Leistung, und als Funktionsparameter (135) eine Information über eine induzierte Gegenspannung des Motors (115) und als ein weiterer Funktionsparameter (135) eine Informtion über einen gemessenen durch den Motor fließenden Messstrom eingelesen wird.

8. Verfahren (600) gemäß Anspruch 7, bei dem im Schritt (610) des Bereitstellens eine Abweichung zwischen der mechanischen Leistung und einem Produkt aus der mit der Kraftkonstanten multiplizierten induzierten Gegenspannung und dem mit einer Drehmomentkonstanten des Motors (115) multiplizierten Messstrom bestimmt wird, wobei die Drehmomentkonstante einen Zusammenhang zwischen einem Drehmoment und dem Messstrom abbildet, wobei das Steuersignal (140) unter Verwendung der Abweichung bereitgestellt wird.

9. Verfahren (600) gemäß einem der vorangegangenen Ansprüche, wobei im Schritt (605) des Einlesens als der Sollbetriebszustand (130) eine Information über einen durch den Motor (115) fließenden Sollstrom und als Funktionsparameter (135) eine Information über den Messstrom eingelesen wird.

10. Verfahren (600) gemäß Anspruch 9, bei dem im Schritt (610) des Bereitstellens eine Abweichung zwischen dem Sollstrom und dem Messstrom bestimmt wird, wobei das Steuersignal (140) unter Verwendung der Abweichung bereitgestellt wird.

11. Verfahren (600) gemäß einem der vorangegangenen Ansprüche, bei dem im Schritt (605) des Einlesens ein Sensorsignal (170) über eine Schnittstelle zu einem Temperatursensor (165) eingelesen wird, wobei das Sensorsignal (170) eine aktuelle Betriebstemperatur des Motors (115) repräsentiert.

12. Verfahren (600) gemäß einem der vorangegangenen Ansprüche, bei dem im Schritt (610) des Bereitstellens das Steuersignal (140) unabhängig von einer Spannung eines Energieversorgungsspeichers des Pflegegeräts (100) bereitgestellt wird.

13. Vorrichtung (105), die ausgebildet ist, um die Schritte des Verfahrens (600) gemäß einem der vorangegangenen Ansprüche in entsprechenden Einheiten (120, 125) auszuführen und/oder anzusteuern.

14. Pflegegerät (100) mit einem Motor (115), zumindest einer mittels des Motors (115) betriebenen Bodenbürste (110) und einer Vorrichtung (105) gemäß Anspruch 13.

15. Computer-Programmprodukt mit Programmcode zur Durchführung des Verfahrens (600) nach einem der vorangegangenen Ansprüche, wenn das Computer-Programmprodukt auf einer Vorrichtung (105) ausgeführt wird.
